# EUROPEAN PATENT APPLICATION

(11) **EP 4 653 863 A1**
(43) Date of publication of application: **26.11.2025**
(21) Application number: 25175748.0
(22) Date of filing: 12.05.2025
(51) Int. Cl.: G01N 30/72

(54) **AN ELECTROCHEMICAL CORROSION-RESISTANT CONNECTOR FOR A LIQUID CHROMATOGRAPHY SYSTEM**

(30) Priority: 22.05.2024 US 202418671286
(71) Applicant: Thermo Finnigan LLC, San Jose, CA 95134 (US)
(72) Inventor: SILVEIRA, Joshua A., Gilroy (US); GUREVICH, Vladimir, Cupertino (US); SCHULTZ, Gary A., Ithaca (US); WOUTERS, Eloy R., San Jose (US)
(74) Representative: Boult Wade Tennant LLP

(57) **Abstract**

A connector is configured to fluidically couple a first conduit and a second conduit to enable flow therethrough of a mobile phase for liquid chromatography. The connector includes an electrically-conductive junction for providing, when the electrically-conductive junction is electrically connected with a power source, an electrospray voltage to the mobile phase. The electrically-conductive junction includes a first receptacle having a first sealing surface that interfaces with the mobile phase and fluidically seals with a distal end of the first conduit, a second receptacle having a second sealing surface that interfaces with the mobile phase and fluidically seals with a proximal end of the second conduit, and a through-hole extending from the first receptacle to the second receptacle. The first sealing surface and the second sealing surface each include an electrochemical corrosion-resistant material.

## Description

### BACKGROUND INFORMATION

A mass spectrometer is an instrument that may be used to detect, identify, and/or quantify molecules based on their mass-to-charge ratio (m/z). A mass spectrometer generally includes an ion source for generating ions from components included in a sample, a mass analyzer for separating the ions based on their m/z, and an ion detector for detecting the separated ions. The mass spectrometer may be connected to a computer-based software platform that uses data from the ion detector to construct a mass spectrum that shows a relative abundance of each of the detected ions as a function of m/z. The m/z of ions may be used to detect and quantify molecules in simple and complex mixtures.

An ion source may generate ions from an analyte in many different ways. In conventional electrospray ionization (ESI), a liquid sample flows through a small-diameter capillary emitter positioned in front of a mass analyzer inlet. A high voltage is applied to the liquid sample to generate an electrospray that results in the formation of analyte ions. Analyte ions that enter the mass analyzer inlet are then analyzed by mass spectrometry to generate mass spectra of the analyte ions.

In some instances, components of the sample are separated prior to ionization and introduction to the mass spectrometer, such as by liquid chromatography (LC). For example, an LC system may separate, over time, analytes (e.g., peptides) within a sample as the analytes are differentially retained on an LC column. The mass spectrometer then acquires a series of mass spectra as the analytes elute from the LC system over time. LC reduces the ionization suppression and spectral complexity that would result if a complex sample were directly infused to the mass spectrometer. Thus, through the means of LC, elution of analytes is spread out over time before introduction of the analytes to the mass spectrometer. The mass spectra acquired by the mass spectrometer may be used to detect, identify, and/or quantify analytes in the sample.

The LC system generally includes a chromatographic column including a stationary phase, such as a particulate material (e.g., an adsorbent, a gel, etc.), and a pump to deliver a mobile phase, such as a solvent (e.g., water, methanol, acetonitrile, etc.), through the chromatographic column for separating components in the sample. The outlet of the chromatographic column is fluidically connected with the ESI emitter of the mass spectrometer.

However, the sensitivity, efficiency, stability, and accuracy of ESI methods decreases with prolonged use of the ESI emitter. For example, as the number of injections of the sample into the LC-MS system increases, performance of the ESI emitter decreases.

### SUMMARY

The following description presents a simplified summary of one or more aspects of the methods and systems described herein in order to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects of the methods and systems described herein in a simplified form as a prelude to the more detailed description that is presented below.

In some illustrative examples, a connector is configured to fluidically couple a first conduit and a second conduit to enable flow therethrough of a mobile phase for liquid chromatography, the connector comprising an electrically-conductive junction for providing, when the electrically-conductive junction is electrically connected with a power source, an electrospray voltage to the mobile phase, the electrically-conductive junction comprising: a first receptacle for receiving a distal end of the first conduit, the first receptacle comprising a first sealing surface that interfaces with the mobile phase and fluidically seals with the distal end of the first conduit; a second receptacle for receiving a proximal end of the second conduit, the second receptacle comprising a second sealing surface that interfaces with the mobile phase and fluidically seals with the proximal end of the second conduit; and a through-hole extending from the first receptacle to the second receptacle; wherein the first sealing surface and the second sealing surface each comprise an electrochemical corrosion-resistant material.

In some illustrative examples, a system for analyzing a sample by liquid chromatography-mass spectrometry comprises: a first conduit; a second conduit; an electrospray ionization (ESI) emitter; a connector positioned between the first conduit and the second conduit and fluidically coupled with the first conduit and the second conduit to enable flow of a mobile phase through the first conduit and the second conduit to the ESI emitter, the connector including an electrically-conductive junction comprising: a first receptacle for receiving a distal end of the first conduit, the first receptacle comprising a first sealing surface configured to interface with the mobile phase and fluidically seal with the distal end of the first conduit; a second receptacle for receiving a proximal end of the second conduit, the second receptacle comprising a second sealing surface configured to interface with the mobile phase and fluidically seal with the proximal end of the second conduit; and a through-hole extending from the first receptacle to the second receptacle; wherein the first sealing surface and the second sealing surface each comprise an electrochemical corrosion-resistant material; and a power source electrically connected with the electrically-conductive junction to provide an electrospray voltage to the mobile phase.

In some illustrative examples, a method of making a connector configured to fluidically couple a first conduit and a second conduit to enable flow therethrough of a mobile phase for liquid chromatography, comprises: forming an electrically-conductive junction configured to provide, when the electrically-conductive junction is electrically connected with a power source, an electrospray voltage to the mobile phase, the electrically-conductive junction comprising: a first receptacle at a proximal end of the connector for receiving a distal end of the first conduit, the first receptacle comprising a first sealing surface for interfacing with the mobile phase and fluidically sealing with the distal end of the first conduit; a second receptacle at a distal end of the connector for receiving a proximal end of the second conduit, the second receptacle comprising a second sealing surface for interfacing with the mobile phase and fluidically sealing with the proximal end of the second conduit; and a through-hole extending from the first receptacle to the second receptacle; wherein the first sealing surface and the second sealing surface each comprise an electrochemical corrosion-resistant material.

### BRIEF DESCRIPTION OF THE DRAWINGS

The accompanying drawings illustrate various examples and are a part of the specification. The illustrated examples are merely examples and do not limit the scope of the disclosure. Throughout the drawings, identical or similar reference numbers designate identical or similar elements.
FIG. 1 shows functional components of an illustrative liquid chromatography-mass spectrometry (LC-MS) system.
FIG. 2 shows functional components of an illustrative liquid chromatography (LC) system included in the LC-MS system of FIG. 1.
FIG. 3 shows a functional diagram of an illustrative ion source included in the LC-MS system of FIG. 1.
FIG. 4A shows an illustrative graph that plots the quantity of peptides identified by LC-MS (e.g., by the LC-MS system of FIG. 1) using a particular emitter as a function of the number of injections into the LC-MS system with the particular emitter.
FIG. 4B shows an illustrative graph that plots peak width of chromatographic peaks acquired by LC-MS (e.g., by the LC-MS system of FIG. 1) using a particular emitter as a function of the number of injections into the LC-MS system with the particular emitter.
FIG. 5A shows another illustrative graph that plots the quantity of peptides identified by LC-MS (e.g., by the LC-MS system of FIG. 1) using a particular emitter as a function of the number of injections into the LC-MS system with the particular emitter.
FIG. 5B shows an illustrative graph that plots resistance of a mobile phase and that may be acquired by LC-MS (e.g., by the LC-MS system of FIG. 1) using a particular emitter as a function of the number of injections into the LC-MS system with the particular emitter.
FIG. 6A shows a perspective view of an illustrative electrochemical-resistant connector for an LC-MS system.
FIG. 6B shows a cross-sectional view of the connector of FIG. 6A taken along the dash-dot-dash line labeled VIB in FIG. 6A.
FIG. 6C shows a view of a proximal end of the connector of FIG. 6A.
FIG. 6D shows a view of a distal end of the connector of FIG. 6A.
FIG. 7A shows an illustrative configuration of the connector of FIG. 6A coupled with a chromatographic column and an electrospray ionization emitter.
FIG. 7B shows a cross-sectional view of the configuration of FIG. 7A.
FIG. 8A shows an illustrative graph that plots peak width of chromatographic peaks acquired by LC-MS (e.g., by an LC-MS system including the connector of FIG. 6A) using a particular emitter as a function of the number of injections into the LC-MS system with the particular emitter.
FIG. 8B shows an illustrative graph that plots onset voltage for a particular emitter as a function of the number of injections into an LC-MS system (e.g., an LC-MS system including the connector of FIG. 6A) with the particular emitter.
FIG. 9 shows a cross-sectional view of another illustrative electrochemical-resistant connector for an LC-MS system.
FIG. 10A shows a cross-sectional view of an electrochemical-resistant connector for an LC-MS system that includes a first material.
FIG. 10B shows a cross-sectional view of the connector of FIG. 10A including a second material coated on the first material at a first sealing surface and a second sealing surface.

### DETAILED DESCRIPTION

As described herein, a connector is configured to fluidically connect components of an LC-MS system and, where an ESI emitter is non-conductive, to provide a liquid-metal interface for application of an electrospray voltage to a mobile phase. In some illustrative examples, the connector comprises an electrically-conductive junction that interfaces with the mobile phase for providing, when the electrically-conductive junction is electrically connected with a power source, an electrospray voltage to the mobile phase. The electrically-conductive junction comprises a first receptacle for receiving a distal end of a first conduit (e.g., a conduit included in or fluidically coupled with a chromatographic column), a second receptacle for receiving a proximal end of a second conduit (e.g., a conduit included in or fluidically coupled with the ESI emitter), and a through-hole extending from the first receptacle to the second receptacle for allowing flow of the mobile phase therethrough. The electrically-conductive junction comprises an electrochemical corrosion-resistant material, which reduces or eliminates electrochemical corrosion at sealing surfaces and thus helps prolong the useable lifetime of the ESI emitter and helps improve the sensitivity and resolution of ESI-based LC-MS methods, as compared with conventional connectors for LC-MS.

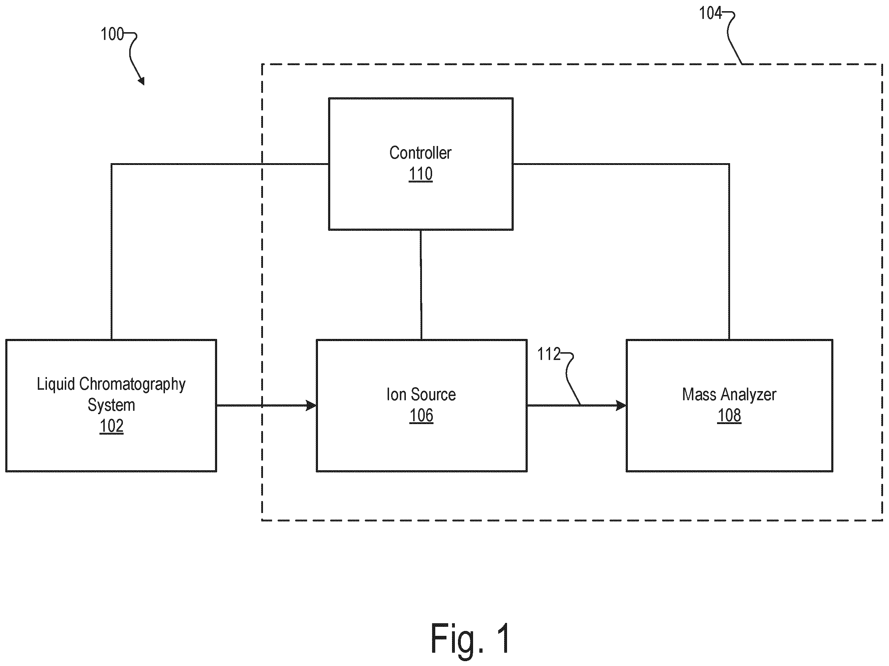

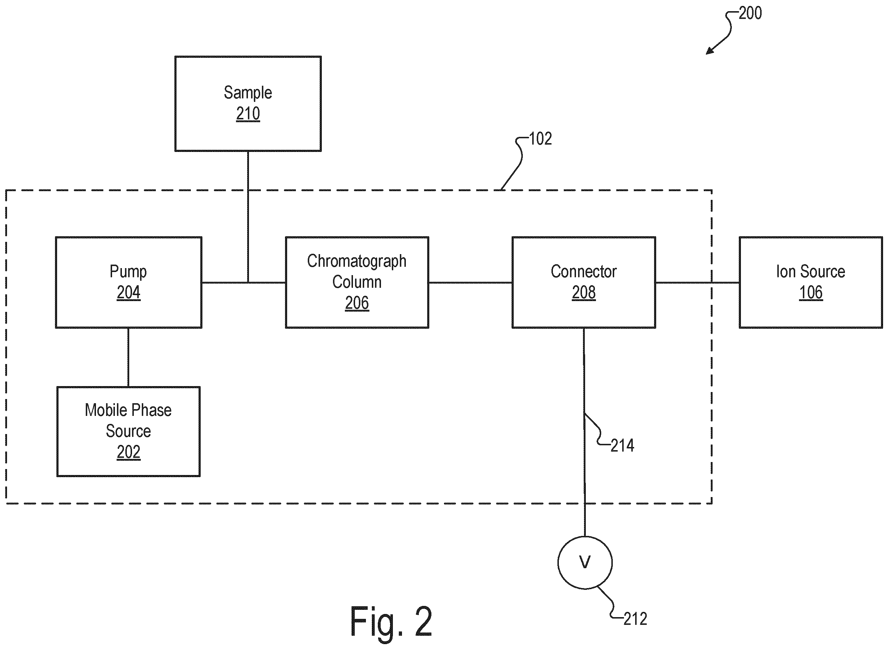

The systems and methods described herein may be implemented in conjunction with a liquid chromatography-mass spectrometry (LC-MS) system. FIG. 1 shows functional components of an illustrative LC-MS system 100. As shown, LC-MS system 100 includes a liquid chromatography (LC) system 102 and a mass spectrometer 104. LC system 102 is configured to separate components of a sample and deliver the components to mass spectrometer 104 for mass analysis by mass spectrometer 104. In some examples, LC system 102 may also detect a relative abundance of the separated components, such as by generating a chromatogram representative of the components within the sample. An illustrative LC system 102 is described below in more detail with reference to FIG. 2.

Mass spectrometer 104 includes an ion source 106, a mass analyzer 108, and a controller 110. Mass spectrometer 104 may further include any additional or alternative components (not shown) as may suit a particular implementation (e.g., ion optics, filters, an autosampler, etc.).

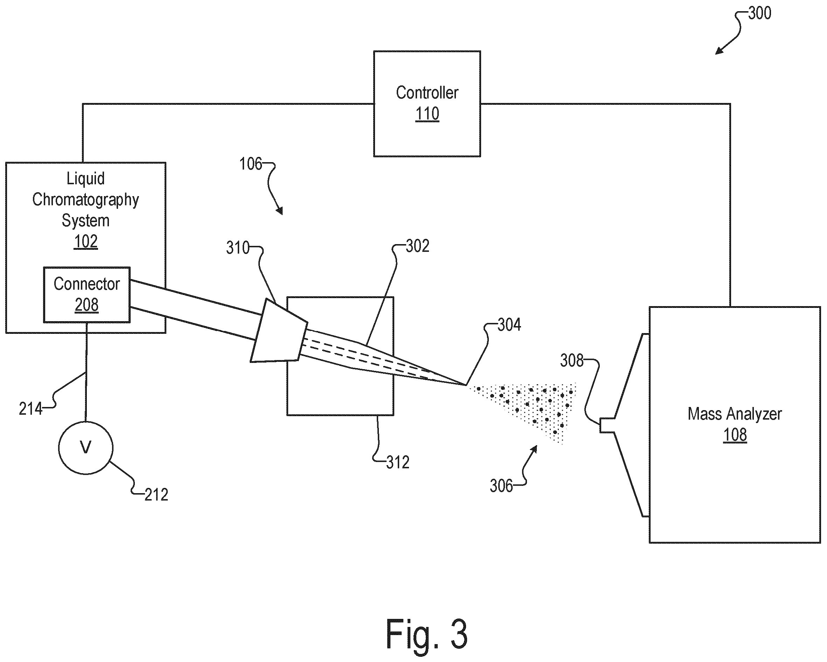

Ion source 106 is configured to produce an ion stream 112 of ions from the sample by electrospray ionization (ESI) and deliver the ions to mass analyzer 108. An illustrative ion source is described below in more detail with reference to FIG. 3.

Mass analyzer 108 is configured to receive ion stream 112 and separate the ions according to m/z of each of the ions. Mass analyzer 108 may be implemented by any suitable mass analyzer, such as a quadrupole mass filter, an ion trap (e.g., a three-dimensional quadrupole ion trap, a cylindrical ion trap, a linear quadrupole ion trap, a toroidal ion trap, etc.), a time-of-flight (TOF) mass analyzer, an electrostatic trap mass analyzer (e.g. an orbital electrostatic trap such as an Orbitrap mass analyzer, a Kingdon trap, an electrostatic linear ion trap, etc.), a Fourier transform ion cyclotron resonance (FT-ICR) mass analyzer, a sector mass analyzer, and the like.

An ion detector (not shown) is configured to detect ions at each of a variety of different m/z and responsively generate an electrical signal representative of ion intensity. The electrical signal is transmitted to controller 110 for processing, such as to construct a mass spectrum of the sample. For example, mass analyzer 108 may emit an emission beam of separated ions to the ion detector, which is configured to detect the ions in the emission beam and generate or provide data that can be used by controller 110 to construct a mass spectrum of the sample. The ion detector may be implemented by any suitable detection device, including without limitation an electron multiplier, a Faraday cup, and the like.

Controller 110 may be communicatively coupled with, and configured to control operations of, LC-MS system 100. For example, controller 110 may be configured to control operation of various hardware components included in LC system 102, ion source 106, mass analyzer 108, and/or the detector. To illustrate, controller 110 may be configured to control an amount of a mobile phase pumped through LC system 102, control a high voltage applied to a connector of LC system 102, control an accumulation time of mass analyzer 108, control an oscillatory voltage power supply and/or a DC power supply to supply an RF voltage and/or a DC voltage to mass analyzer 108, adjust values of the RF voltage and DC voltage to select an effective m/z (including a mass tolerance window) for analysis, and adjust the sensitivity of the ion detector (e.g., by adjusting the detector gain).

Unless otherwise specified or indicated by context, the terms "a", "an", and "the" mean "one or more." For example, "a molecule" should be interpreted to mean "one or more molecules."

As used herein, "about" and "substantially" are understood by persons of ordinary skill in the art and vary to some extent given the context in which they are used. If there are uses of the terms that are not clear to persons of ordinary skill in the art given the context in which they are used, "about" and "substantially" mean less than or equal to 10% of the particular value.

FIG. 2 shows functional components of an illustrative implementation 200 of LC system 102. As shown, LC system 102 includes a mobile phase source 202, a pump 204, a chromatographic column 206 ("column 206"), and a connector 208. FIG. 2 is merely illustrative, as LC system 102 may have other suitable configurations. LC system 102 may also include additional or alternative components not shown in FIG. 2 as may serve a particular implementation (e.g., a detector, a degassing unit, an injector, a column oven, etc.).

Mobile phase source 202 provides a mobile phase that receives injection of a sample 210 and flows through column 206 and connector 208 to carry sample 210 to ion source 106 of mass spectrometer 104. The mobile phase may include a solvent, such as water, methanol, acetonitrile, etc. In some examples, the mobile phase flows through LC system 102 at flow rates ranging from about 1 microliter (µL) per minute (1 µL/min) to about 1 milliliter (mL) per minute (1 mL/min). In nanospray ionization (NSI), the mobile phase may flow through LC system 102 under nanoscale flow rates ranging from about 10-50 nanoliters (nL) per minute (10-50 nL/min) to about 1000-1500 nL/min. Sample 210 may include, for example, chemical components (e.g., molecules, ions, etc.) and/or biological components (e.g., metabolites, proteins, lipids, etc.) for detection and analysis by LC-MS system 100.

Pump 204 is fluidically coupled with mobile phase source 202 and is configured to pump the mobile phase through column 206 and connector 208 to ion source 106. To illustrate, pump 204 is configured to deliver the mobile phase to column 206 and/or connector 208 at a stable (e.g., substantially constant) flow rate. In some examples, pump 204 includes at least a pair of reciprocating pistons such that a first piston delivers flow while a second piston aspirates the mobile phase at the stable flow rate. The pump may be implemented by any suitable pumping device, including without limitation a reciprocating pump, a syringe pump, a binary pump, a constant pressure pump, a quaternary pump, and the like. In some examples, pump 204 may be communicatively coupled with controller 110 such that controller 110 is configured to control the flow rate of the mobile phase delivered by pump 204. Additionally, the flow rate of pump 204 may be programmable, such as by using a user interface of controller 110.

Column 206 is configured to receive the mobile phase delivered by pump 204. Column 206 includes a stationary phase, such as a particulate material (e.g., an adsorbent, a gel, a porous solid such as glass, silica, alumina, etc.). In some examples, the stationary phase is bonded or absorbed to an interior surface within the opening of column 206 and/or packed within the opening of column 206. The stationary phase is configured to differentially interact with components of sample 210 in the mobile phase to separate components of sample 210 based on, for example, their size, their affinity to the stationary phase, their polarity, and/or their hydrophobicity.

The mobile phase flows from column 206 to ion source 106 to ionize the analytes within the mobile phase and direct the ions into mass analyzer 108. In the examples described herein, ion source 106 ionizes the analytes by electrospray ionization. Electrospray ionization is performed by pumping the mobile phase through an emitter of ion source 106 and applying an electrospray voltage to the mobile phase to generate an ion spray from a tip of the emitter. The emitter is either conductive (e.g., stainless steel) or non-conductive (e.g., glass). In the case of a conductive emitter, a high potential difference of about 1 kV to 5 kV is maintained between the emitter and the mass spectrometer inlet, acting as opposing electrodes. In the case of a non-conductive emitter, a liquid-metal junction is positioned upstream of the emitter tip for application of the electrospray voltage to the mobile phase, which carries the electrospray voltage to the emitter tip by the conductivity of the mobile phase.

Connector 208 is configured to fluidically connect components of LC-MS system 100 and, where the emitter is non-conductive, to provide a liquid-metal interface for application of an electrospray voltage to the mobile phase. As shown, connector 208 is positioned between column 206 and ion source 106 to fluidically connect LC system 102 with ion source 106. However, in other examples (not shown in FIG. 2), connector 208 may be positioned elsewhere within LC system 102 and used to fluidically connect other components of LC-MS system 100. For example, connector 208 may be positioned upstream of column 206 such that connector 208 fluidically connects pump 204 with column 206. Additionally or alternatively, column 206 and/or connector 208 may be positioned in ion source 106.

As will be described below in more detail, connector 208 includes an electrically-conductive junction having a first receptacle for receiving a first conduit (e.g., included in or fluidically coupled to column 206), a second receptacle for receiving a second conduit (e.g., included in or fluidically coupled to ion source 106), and a through-hole extending from the first receptacle to the second receptacle for allowing flow of the mobile phase therethrough. The electrically-conductive junction may be integral with connector 208 and/or inserted within connector 208.

The electrically-conductive junction of connector 208 interfaces with the mobile phase and includes an electrically-conductive material such that the junction is configured to provide, when the electrically-conductive junction is electrically coupled with a power source 212, an electrospray voltage (e.g., about 2-6 kilovolts (kV) for ESI or about 0.7-3.5 kV for NSI) to the mobile phase. The electrically-conductive junction may be connected to power source 212 by way of high voltage line 214 (e.g., an electrical cable or other wiring or electrical connection). The electrospray voltage may be carried to an ESI emitter of ion source 106 by the mobile phase.

FIG. 3 shows a functional diagram of an illustrative implementation 300 of an interface between ion source 106 and mass analyzer 108. FIG. 3 is merely illustrative, as ion source 106 and mass analyzer 108 may have other suitable configurations. As shown, ion source 106 includes an ESI emitter 302. Ion source 106 may also include additional or alternative components not shown in FIG. 3 as may serve a particular implementation, such as a positioning system, a voltage source, a housing (e.g., that houses components of ion source 106 and/or attaches to mass analyzer 108), cameras, adapters, locks, mounting components, gas supply lines, and the like.

Emitter 302 may be implemented by a needle or a capillary tube configured for electrospray ionization. Emitter 302 may be formed of a non-conductive material, such as glass, borosilicate, or any other suitable material, and may be coated with an outer coating, such as a polyimide or other polymer coating. In some examples, emitter 302 is configured for the low flow rates of NSI (e.g., from about 10-50 nL/min up to about 1000-1500 nL/min). In other examples, emitter 302 is configured for capillary flow rates (e.g., from about 1 µL/min up to about 10-20 µL/min), microflow rates (e.g., from about 10 µL/min up to about 100 µL/min), or conventional ESI analytical flow rates (e.g., greater than about 50 µL/min). Emitter 302 may be included in an emitter cartridge that may include, without limitation, a mounting unit for holding emitter 302, adapters for connecting or integrating emitter 302 with LC system 102, onboard nonvolatile memory (which may store position data and/or other data that may be used for positioning of emitter 302), and/or any other suitable components. In some examples in which the emitter cartridge includes onboard memory, emitter cartridge may be communicatively coupled with controller 110, such as by way of a wired or wireless connection.

LC system 102 provides a mobile phase that flows through emitter 302. An electrospray voltage is applied (e.g., by way of high voltage line 214) to a metal junction in connector 208, which interfaces with the liquid mobile phase. The electrospray voltage is carried by the mobile phase to tip 304 of emitter 302. The electrospray voltage produces a strong electric field at tip 304 of emitter 302. The electric field induces ion migration in the mobile phase as the ions are emitted from tip 304 of emitter 302, resulting in electrohydrodynamic disintegration of the mobile phase, generation of charged droplets, and formation of a spray plume 306 that travels toward inlet 308 of mass analyzer 108. As spray plume 306 travels toward inlet 308, the solvent evaporates from the charged droplets, causing the charge intensity on the surface of the droplets to gradually increase until the droplets split into one or more charged gas phase ions. The charged gas phase ions are then introduced into inlet 308 of mass analyzer 108 by application of the electric field, vacuum at the inlet, and if present, sheath gas at emitter 302.

In some examples, emitter 302 is inserted in a nozzle 310 and a sheath gas, such as nitrogen gas (N₂), flows coaxially around emitter 302 within nozzle 310. As the mobile phase exits tip 304, the sheath gas exits a distal end of nozzle 310 and flows around spray plume 306, thereby controlling the position, shape, and direction of spray plume 306 and reducing the stratification of mass. The sheath gas flow rate may be adjusted to achieve a desired position and shape of spray plume 306. The sheath gas may also reduce the surface tension barrier to initiate spray plume 306 formation. In further examples, a heated auxiliary gas may be used to aid in desolvation of the charged droplets in spray plume 306. However, at low flow rates (e.g., nanoflow) good sensitivity may be obtained without a sheath gas and/or auxiliary gas.

In some examples, a positioning system 312 is configured to hold tip 304 of emitter 302 at a controlled distance (e.g., about 0.1 - 3 cm) from inlet 308 of mass analyzer 108. Additionally, as shown in FIG. 3, emitter 302 is angled relative to a longitudinal axis of inlet 308. Any suitable angle may be used (e.g., 45°, 30°, 22.5°, 15°, etc.). In other examples, emitter 302 is not angled relative to the longitudinal axis of inlet 308 but is positioned so that a longitudinal axis of emitter 302 and the longitudinal axis of inlet 308 are substantially parallel. Inlet 308 is shown adjacent to mass analyzer 108 for illustrative purposes only. It will be recognized that various other components may be positioned between inlet 308 and mass analyzer 108, such as but not limited to ion optics, ion guides, ion traps, ion mobility separators, filters, and/or collision cells. Inlet 308 may have any suitable configuration, such as an orifice or a capillary (e.g., an ion transfer tube (ITT), such as a round bore ITT, or a high capacity transfer tube (HCTT), such as a letterbox inlet). In alternative examples, inlet 308 is a field asymmetric ion mobility spectrometry (FAIMS) entrance orifice, with the FAIMS electrodes positioned directly in front of the inlet to the mass analyzer. When emitter 302 is mounted on positioning system 312, positioning system 312 may automatically adjust the position of emitter 302 (e.g., the position of tip 304) relative to inlet 308.

Mass analyzer 108 receives the analyte ions in spray plume 306 that enter inlet 308 and performs a mass analysis of the analyte ions. As explained above, controller 110 may process the received signals and construct mass spectra of the ions introduced into inlet 308 based on the signals detected by the ion detector in mass analyzer 108.

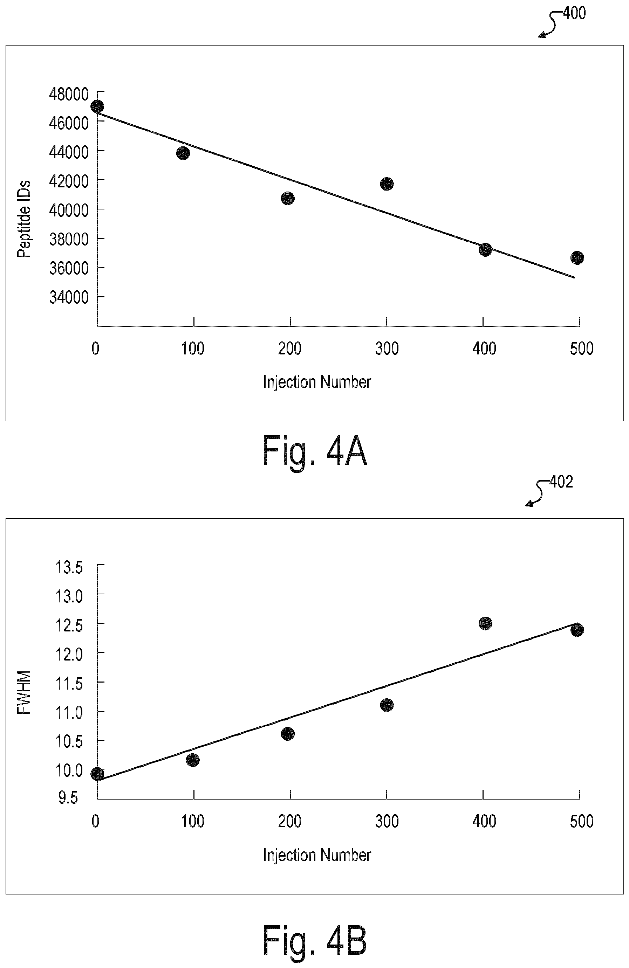

As mentioned above, performance of emitter 302 decreases with increasing usage of emitter 302. An LC-MS experiment was performed to assess changes in performance with emitter aging, and the results are shown in the plots of FIGS. 4A and 4B. The experiment included a sequence of 500 injections of 1 ug HeLa cell digest. In addition, the sequence included one blank run every 5 injections, yielding a total of 575 injections. Thus, counting blanks and performance runs, emitters were subjected to about 20% additional injections that are not reflected in the plots shown in FIGS 4A and 4B. In the LC-MS experiments, a 200 ng HeLa load was employed. A connector including a titanium junction fluidically connected the emitter with the LC column. For each sample injection, an electrospray voltage was applied to the mobile phase by way of the titanium junction in the connector to form a spray plume of ions for mass analysis (e.g., to identify a number of peptides within the sample). FIG. 4A shows an illustrative graph 400 that plots a quantity of peptides identified by LC-MS (e.g., by the LC-MS system of FIG. 1) using the emitter as a function of the number of injections into the LC-MS system with the emitter. As shown in FIG. 4A, the number of peptides reliably identified by the LC-MS analyses decreased as the number of injections into the LC-MS system increased, which was believed to be due to degradation of the emitter with increasing numbers of injections.

FIG. 4B shows an illustrative graph 402 that plots peak width of the chromatographic peaks acquired by the LC-MS analysis of FIG. 4A using the emitter as a function of the number of injections into the LC-MS system with the emitter. The peak width of chromatographic peaks were measured at full-width half-maximum (FWHM). As shown, widths of the chromatographic peaks broadened as the number of injections introduced into the LC-MS system increased, which was believed to be due to degradation of the emitter. Such broadening of the chromatographic peaks may decrease performance of the LC-MS system and make it difficult to distinguish peptides within the samples.

The inventors desired to identify the root cause of decreased performance and to design an emitter apparatus with improved lifetime. Effectively, ESI is a two-electrode controlled-current electrochemical cell. For a conductive emitter, the emitter is the working electrode and the mass spectrometer inlet is the counter electrode. The emitter also serves as a current-controlled source. The rate of charged droplet production by the ion source defines the average current that flows in the cell. In positive mode, oxidation reactions occur in the ESI emitter. Due to the current produced from the source, an interfacial potential at the working electrode develops. The current density on the working electrode affects the interfacial potential which ultimately determines what reactions in the system are possible and the rates at which they occur. Differences in working electrode materials become most apparent when current densities are low. For a stainless steel emitter, a low anodic current drives reactions involving corrosion of iron, whereas at higher current densities the interfacial potential increases to oxidize other species in the system including the solvent. The physical location of the electrochemical reaction and the electrode material thus can influence the mass spectra. For example, in a pulled static nanospray emitter, where the electrochemistry occurs within the same physical space as the sample, the mass spectra may often become time dependent as enrichment of electrochemical products occur. Alternatively, anodic corrosion of zinc and stainless steel emitters have been shown to produce Zn²⁺ and Fe²⁺ ions in the mass spectra, respectively. However, determining the exact nature and extent of these electrochemical reactions is often a challenging problem.

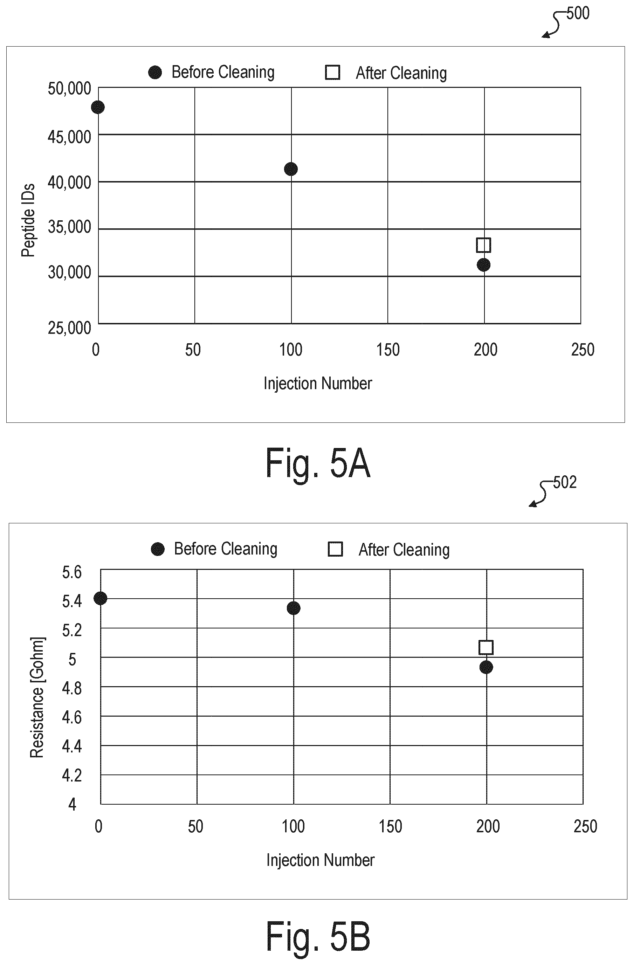

The inventors noticed that, in the experiments described with reference to FIGS. 4A and 4B, deposits formed at the tip of the emitter with increased usage. Accordingly, the inventors performed an LC-MS experiment to assess whether cleaning of the emitter tips would improve emitter performance and prolong emitter lifetime, and the results are shown in the plots of FIGS. 5A and 5B. The experiment included a sequence of 200 injections of 1 ug HeLa cell digest. In addition, the sequence included one blank run every 5 injections. Thus, counting blanks and performance runs, emitters were subjected to about 20% additional injections that are not reflected in the plots shown in FIGS 5A and 5B. In the LC-MS experiments, a 200 ng HeLa load was employed.

FIG. 5A shows an illustrative graph 500 that plots a quantity of peptides identified by LC-MS using a particular emitter as a function of the number of injections into the LC-MS system with the particular emitter. As shown, the number of peptides identified by the LC-MS system decreased as the number of injections introduced into the LC-MS system increased, which was believed to be due to degradation of the emitter. Based on visual observation of the emitter, the inventors believed that degradation of the emitter performance may have been caused by deposits (e.g., analyte ions, solvent ions, ambient ions, electrochemical products, etc.) accumulated on the emitter. Accordingly, the emitter was cleaned to remove the deposits. The cleaning included performing an ultrasonic cleaning of the emitter for about 60 minutes and soaking the emitter overnight in a sodium hydroxide solution (e.g., a solution containing 12 moles of sodium hydroxide per one liter of solution (12M NaOH). After cleaning the emitter, the sample was again injected, in a small number of injections, into the LC-MS system using the same emitter. However, the number of peptides identified by the LC-MS system did not meaningfully increase after the emitter cleaning, indicating that the decreased performance was not due to deposits accumulated on the exterior of the emitter.

FIG. 5B shows an illustrative graph 502 that plots electrical resistance of the mobile phase acquired by the LC-MS analysis of FIG. 5A using the same emitter as a function of the number of injections into the LC-MS system with the emitter. As shown, the resistance of the mobile phase (e.g., approximately 99% water containing 0.1% formic acid) decreased as the number of injections into the LC-MS system increased, which was believed to be due to degradation of the emitter. Similar to the number of peptides identified by the LC-MS system, the resistance of the mobile phase within the LC-MS system did not meaningfully increase after cleaning of the emitter, further indicating that the degradation of the emitter was not due to deposits accumulated on the exterior of the emitter.

Because cleaning of the emitter to remove deposits accumulated on the exterior of the emitter failed to significantly improve performance of the emitter, and based on the mobile phase resistance measurements, the inventors investigated whether the decrease in performance with emitter aging was associated with an electrochemical reaction that was occurring internally within the flow path of the mobile phase. The inventors discovered that, for non-conductive emitter configurations, an electrochemical reaction likely occurs upstream of the emitter at a liquid-metal interface of a titanium junction of a connector included in the LC-MS system. Conventional connectors use titanium as the electrically-conductive junction because titanium enables reproducible machining of a small through hole (on the order of 50 µm inside diameter and 0.5 mm long) for fluid flow through the junction. The titanium junction interfaces with the mobile phase to provide the electrospray voltage to the mobile phase. The electric field generated by the electrospray voltage enriches ions of positive polarity near the liquid meniscus of the mobile phase. When a Coulombic force is sufficient to overcome the surface tension of the mobile phase, positively charged droplets are formed. Due to loss of positive charge via droplet generation, electron transfer reactions (e.g., electrochemical reactions, such as oxidation) involving mobile phase ions occur at the liquid-metal interface of the connector. Such electron transfer reactions electrochemically corrode the liquid-metal interface of the highly electronegative titanium junction of the connector, thus forming or increasing dead volume within the connector, adding contaminants to the mobile phase, and forming deposits on interior surfaces of the emitter, all of which cause degradation of the emitter, decrease emitter performance over time, and/or contaminate the mass spectra generated by the mass spectrometer.

To prevent these problems, a liquid-metal interface of a connector included in an LC-MS system may include an electrochemical corrosion-resistant material. In some illustrative examples, a connector is configured to fluidically couple a first conduit (e.g., included in or fluidically coupled with a chromatographic column) and a second conduit (e.g., included in or fluidically coupled with an ESI emitter) to enable flow therethrough of a mobile phase for liquid chromatography. The connector comprises an electrically-conductive junction for providing, when the electrically-conductive junction is electrically connected with a power source, an electrospray voltage to the mobile phase. The electrically-conductive junction comprises a first receptacle for receiving a distal end of the first conduit, a second receptacle for receiving a proximal end of the second conduit, and a through-hole extending from the first receptacle to the second receptacle. The electrically-conductive junction comprises an electrochemical corrosion-resistant material.

The systems, devices, and apparatuses described herein provide various benefits, which may include one or more advantages over conventional LC-MS systems and connectors. For example, the systems, devices, and apparatuses described herein include an electrochemical corrosion-resistant material at the electrically-conductive junction of the connector. Additionally, the systems, devices, and apparatuses described herein may be configured to reduce and/or prevent electrochemical reactions at the electrically-conductive junction to reduce and/or prevent corrosion of the connector and/or degradation of the emitter. The reduction and/or prevention of corrosion of the connector and/or degradation of the emitter may further reduce and/or prevent a decrease in the sensitivity, efficiency, stability, and accuracy of ESI methods of LC-MS systems including the electrochemical corrosion-resistant material (e.g., by reducing and/or preventing a contamination of the mobile phase with electrochemical products, a broadening of peak widths of chromatographic peaks, and/or a decrease in ion identification of the mass spectra).

Various illustrative examples will now be described in more detail with reference to the figures. The systems, devices, and apparatuses described herein may provide one or more of the benefits mentioned above and/or various additional and/or alternative benefits that will be made apparent herein.

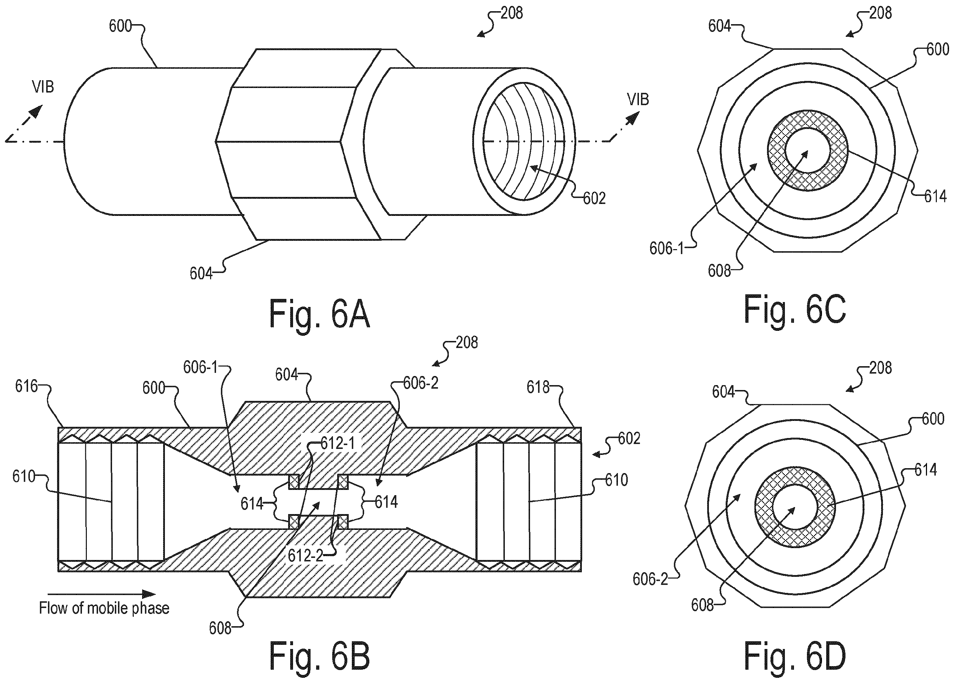

FIGS. 6A-6D show various views of an illustrative implementation of electrochemical-resistant connector 208 for an LC-MS system (e.g., LC-MS system 100). FIG. 6A shows a perspective view of connector 208. FIG. 6B shows a cross-sectional view of connector 208 taken along the dash-dot-dash line labeled VIB in FIG. 6A. FIGS. 6C and 6D show views of a proximal end and a distal end of connector 208, respectively. As used herein, proximal refers to an upstream side of connector 208 and distal refers to a downstream side of connector 208. However, it will be recognized that in some examples connector 208 is symmetrical and thus can be connected in any orientation.

As shown in FIGS. 6A-6D, connector 208 comprises an outer sheathing 600 and an electrically-conductive junction 602 extending within outer sheathing 600. While outer sheathing 600 is shown having an elongate cylindrical shape, other suitable shapes (e.g., cubical, prismatic, conical, etc.) for outer sheathing 600 may be used. In some examples, outer sheathing 600 includes a grip 604 having one or more flat surfaces configured to facilitate coupling of connector 208 with other components of the LC-MS system (e.g., one or more conduits included in the LC-MS system).

Junction 602 comprises a first receptacle 606-1 for receiving a first conduit (e.g., a conduit included in or fluidically coupled to column 206), a second receptacle 606-2 for receiving a second conduit (e.g., a conduit included in or fluidically coupled to emitter 302), and a through-hole 608 extending between first receptacle 606-1 and second receptacle 606-2 for allowing flow of the mobile phase therethrough. In the illustrated example, a portion of each receptacle 606 is a conical shape that narrows toward through-hole 608, which may facilitate receiving and/or coupling conduits therein. However, receptacles 606 may include other suitable shapes (e.g., cylindrical, cubical, prismatic, etc.). For example, receptacles 606 may have a constant diameter such that receptacles 606 do not narrow towards through-hole 608. In some examples, each receptacle 606 includes threading 610 for facilitating receiving and/or coupling conduits therein. As shown in FIG. 6B, junction 602 is integral with outer sheathing 600. In other examples (not shown), junction 602 is distinct from but mounted or set within outer sheathing 600.

Junction 602 further comprises a first sealing surface 612-1 within first receptacle 606-1 and a second sealing surface 612-2 within second receptacle 606-2. First sealing surface 612-1 is configured to interface with the mobile phase and fluidically seal with the distal end of the first conduit. For example, first sealing surface 612-1 extends inwardly within first receptacle 606-1 at a distal end 616 of first receptacle 606-1 such that, when the first conduit is positioned in first receptacle 606-1, the distal end of the first conduit is configured to abut or be positioned near first sealing surface 612-1. Likewise, second sealing surface 612-2 is configured to interface with the mobile phase and fluidically seal with the proximal end of the second conduit. For example, second sealing surface 612-2 extends inwardly within second receptacle 606-2 at a proximal end 618 of second receptacle 606-2 such that, when the second conduit is positioned in second receptacle 606-2, the proximal end of the second conduit is configured to abut or be positioned near second sealing surface 612-2.

Junction 602 includes a first material that is electrically conductive (e.g., titanium) such that, when junction 602 is electrically coupled with a power source, junction 602 is configured to provide an electrospray voltage to the mobile phase through the liquid-metal interface of junction 602 (e.g., at sealing surfaces 612 and/or in through-hole 608). Junction 602 also includes a second material at first sealing surface 612-1 and second sealing surface 612-2. The second material is an electrochemical corrosion-resistant material such that the second material is configured to reduce and/or prevent an electrochemical reaction at junction 602 and/or electrochemical corrosion at junction 602 (e.g., at sealing surfaces 612). As shown, the second material is a coating 614 on the first material at first sealing surface 612-1 and at second sealing surface 612-2. Coating 614 may be applied to sealing surfaces 612 in any suitable manner, such as by electroplating, sputter coating, chemical vapor deposition (CVD), electron beam vapor deposition, thin-film deposition, etc. Other suitable configurations for including the electrochemical corrosion-resistant material in junction 602 may be used. For example, coating 614 may also be applied on additional surfaces of junction 602, such as an inside surface of through-hole 608. Additionally or alternatively, junction 602 may be formed entirely from the electrochemical corrosion-resistant material, as will be described in more detail below.

The electrochemical corrosion-resistant material is an electrically-conductive material that has a standard reduction potential that is greater than (e.g., more positive than) a threshold standard reduction potential. The standard reduction potential of a species represents the tendency of a species to be reduced. The standard reduction potential is measured as the potential difference between a cathode and an anode of an electrochemical cell, where the anode is a standard hydrogen electrode (SHE) and the cathode is formed of the species to be measured. The standard reduction potential of a species is measured at a temperature of 298 K, a pressure of 1 atm, and in a 1 molar (M) solution. In some examples, the threshold standard reduction potential is the reduction potential of a standard hydrogen electrode (SHE) (e.g., 0 volts (V)). In other examples, the threshold standard reduction potential is the standard reduction potential of titanium (e.g., - 1.6V). In yet further examples, the threshold standard reduction potential is -1.0 V, -0.5 V, - 0.3 V, -0.25 V, -0.1 V, +0.1 V, +0.25 V, +0.5 V, +0.75 V, or +1.0 V.

In some examples, the electrochemical corrosion-resistant material comprises a noble metal. As used herein, noble metals include platinum group metals (ruthenium, rhodium, palladium, osmium, iridium, platinum), gold, silver, copper, rhenium, and mercury. The platinum group metals, silver, gold, and mercury all have a standard reduction potential greater than about 0.6 V, and copper and rhenium have a standard reduction potential greater than about 0.25 V. Additionally or alternatively, the electrochemical corrosion-resistant material comprises cobalt or nickel, which have a standard reduction potential greater than -0.30. Additionally or alternatively, the electrochemical corrosion-resistant material comprises a stainless steel, such as 904L stainless steel. While 904L stainless steel is not completely corrosion-resistant, 904L stainless steel significantly reduces electrochemical corrosion as compared with titanium. In some examples, the electrochemical corrosion-resistant material comprises a metal alloy that includes greater than about ten percent (10%) nickel by mass, greater than about fifteen percent (15%) nickel by mass, greater than about twenty percent (20%) nickel by mass, greater than about twenty five percent (25%) nickel by mass, or greater than about thirty percent (30%) nickel by mass. Additionally or alternatively, the electrochemical corrosion-resistant material comprises a metal alloy that includes less than about five percent (5%) iron by mass, less than about three percent (3%) iron by mass, or less than about one percent (1%) iron by mass. In some examples, the electrochemical corrosion-resistant material comprises a metal alloy that includes greater than about twenty percent (20%) nickel by mass and less than about one percent (1%) iron by mass.

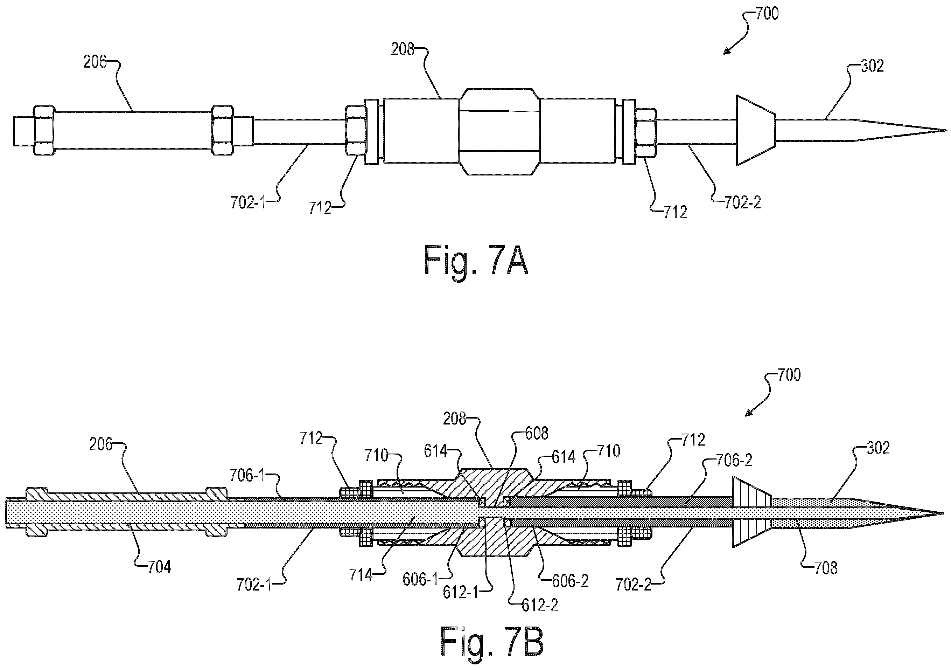

FIGS. 7A and 7B show an illustrative configuration 700 of connector 208 coupled with column 206 and emitter 302 by way of conduits 702 (e.g., conduits 702-1 and 702-2). As shown, column 206 is coupled with a proximal end of a first conduit 702-1 such that an opening 704 of column 206 is fluidically coupled with a first opening 706-1 extending through first conduit 702-1 to allow flow of the mobile phase therethrough. First conduit 702-1 extends from column 206 to connector 208 such that a distal end of first conduit 702-1 is received within first receptacle 606-1 of connector 208 to fluidically couple first opening 706-1 of first conduit 702-1 with through-hole 608 to allow flow of the mobile phase therethrough. Moreover, the distal end of first conduit 702-1 is positioned at first sealing surface 612-1 of first receptacle 606-1 such that first sealing surface 612-1 fluidically seals with the proximal end of first conduit 702-1 (to prevent the mobile phase leaking out of connector 208) and interfaces with the mobile phase.

Likewise, emitter 302 is coupled with a distal end of a second conduit 702-2 such that a capillary 708 of emitter 302 is fluidically coupled with a second opening 706-2 extending through second conduit 702-2 to allow flow of the mobile phase therethrough. Second conduit 702-2 extends from emitter 302 to connector 208 such that a proximal end of second conduit 702-2 is received within second receptacle 606-2 of connector 208 to fluidically couple second opening 706-2 of second conduit 702-2 with through-hole 608 to allow flow of the mobile phase therethrough. Moreover, the proximal end of second conduit 702-2 is positioned at second sealing surface 612-2 of second receptacle 606-2 such that second sealing surface 612-2 fluidically seals with the distal end of second conduit 702-2 (to prevent the mobile phase leaking out of connector 208) and interfaces with the mobile phase. Accordingly, connector 208 is configured to fluidically couple column 206 with emitter 302 to allow the mobile phase to flow from column 206 to emitter 302.

While the illustrated example of FIGS. 7A and 7B shows connector 208 positioned between column 206 and emitter 302, in other examples (not shown in FIGS. 7A and 7B), connector 208 is positioned elsewhere within LC system 102 and used to fluidically connect other components of LC-MS system 100. For example, connector 208 may be additionally or alternatively positioned upstream of column 206 such that connector 208 fluidically connects pump 204 with column 206.

In some examples, connector 208 is a no-dead volume (or zero dead volume (ZDV)) connector. To illustrate, the distal end of first conduit 702-1 may abut first sealing surface 612-1 and the proximal end of second conduit 702-2 may abut second sealing surface 612-2 such that there is substantially no un-swept volume within connector 208 to receive the mobile phase between the distal end of first conduit 702-1 and first sealing surface 612-1 or between the proximal end of second conduit 702-2 and second sealing surface 612-2. Alternatively, connector 208 may be a low-dead volume connector. For example, the distal end of first conduit 702-1 may be positioned near first sealing surface 612-1 and the proximal end of second conduit 702-2 may be positioned near second sealing surface 612-2 such that there is a low volume (e.g., less than about 500 nL, less than about 100 nL, less than about 50 nL, less than about 1 nL, etc.) within connector 208 to receive the mobile phase between the distal end of first conduit 702-1 and first sealing surface 612-1 and/or between the proximal end of second conduit 702-2 and second sealing surface 612-2.

In the illustrated example, each conduit 702 includes a coupling 710 positioned at an end portion of each conduit 702 that is received within the respective receptacle 606 of connector 208 and configured to couple each conduit 702 with connector 208. For example, each coupling may include a ferrule, a Viper fitting, a seal (e.g., a polyetheretherketone (PEEK) seal), etc. As shown, each coupling 710 is threaded into the respective receptacle 606, such as by rotating connector 208 relative to each coupling 710 (e.g., a user may grasp a nut 712 positioned on each conduit 702 and grip 604 of connector 208 to rotate connector 208 relative to each coupling 710 to thread each coupling 710 into connector 208). Each coupling 710 is positioned at a select distance away from the end of each conduit 702 such that the end of each conduit 702 is configured to fluidically seal with the respective sealing surface 612 of connector 208 when each coupling 710 is positioned within the respective receptacle 606. While the illustrated example shows couplings 710 threaded into receptacles 606, alternative configurations (e.g., friction fit, snap fit, etc.) may be used to fluidically couple conduits 702 with connector 208. As shown, when a mobile phase 714 flows through first conduit 702-1, connector 208, and second conduit 702-2, mobile phase 714 interfaces with sealing surfaces 612. In some instances, a conduits 702 may drawback away from sealing surfaces 612, which may cause an unswept volume (e.g., dead volume) of mobile phase 714 between first sealing surface 612-1 and first conduit 702-1 and/or second sealing surface 612-2 and second conduit 702-2. Such unswept volume of mobile phase 714 in no-dead volume and/or low-dead volume connectors may result in broader chromatographic peaks.

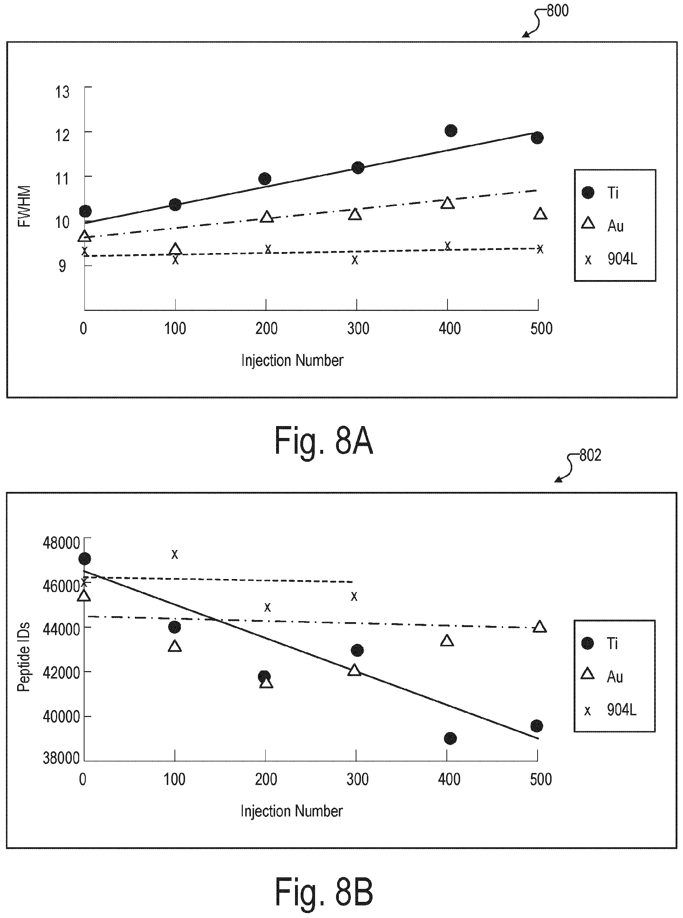

The inventors investigated whether application of the electrochemical corrosion-resistant material at the first sealing surface and the second sealing surface of the connector would improve emitter performance and prolong emitter lifetime. LC-MS experiments were performed to assess changes in performance with emitter aging, and the results are shown in the plots of FIGS. 8A and 8B. The experiments included a sequence of 500 injections of 1 ug HeLa cell digest. In addition, the sequence included one blank run every 5 injections, yielding a total of 575 injections. Thus, counting blanks and performance runs, emitters were subjected to about 20% additional injections that are not reflected in the plots shown in FIGS 8A and 8B. In the LC-MS experiments, a 200 ng HeLa load was employed. Various connectors including an electrically-conductive junction fluidically connected the emitters with the LC column. For each sample injection, an electrospray voltage was applied to the mobile phase by way of the electrically-conductive junction in the connector to form a spray plume of ions for mass analysis (e.g., to identify a number of peptides within the sample).

FIGS. 8A and 8B show the effects of including the electrochemical corrosion-resistant material at the sealing surfaces of the various connectors. FIG. 8A shows an illustrative graph 800 that plots peak width of chromatographic peaks acquired by LC-MS using each emitter as a function of the number of injections into the LC-MS system with each emitter. The peak width of chromatographic peaks were measured at full-width half-maximum (FWHM). As shown, for the first experiment performed with a first connector having a titanium junction without an electrochemical corrosion-resistant material included at the sealing surfaces, widths of the chromatographic peaks broadened as the number of injections introduced into the LC-MS system increased (e.g., as shown by the solid line marked by black circles). For the second experiment performed with a second connector including a titanium junction with an electrochemical corrosion-resistant material of gold at the sealing surfaces of the junction, widths of the chromatographic peaks slightly broadened as the number of injections introduced into the LC-MS system increased (e.g., as shown by the dash-dot-dash line marked by open triangles). However, the widths of the chromatographic peaks for the second experiment performed with the second connector did not broaden as much as the widths of the chromatographic peaks for the first experiment performed with the first connector, which is believed to be due to the electrochemical corrosion-resistant material of gold included at the sealing surfaces of the second connector. Additionally, for the third experiment performed with a third connector having an electrochemical corrosion-resistant material of 904L stainless steel included at the sealing surfaces of the electrically-conductive junction, widths of the chromatographic peaks did not broaden as the number of injections introduced into the LC-MS system increased (e.g., as shown by the dashed line marked by "x"), which is believed to be due to the electrochemical corrosion-resistant material of 904L stainless steel included at the sealing surfaces of the third connector.

The reduction and/or elimination of the broadening of the chromatographic peaks using the second and third connectors having an electrochemical corrosion-resistant material at sealing surfaces of the titanium junction indicate that the electrochemical corrosion-resistant material included at the sealing surfaces of the titanium junction reduce and/or eliminate corrosion of the junction and, hence, degradation of the emitter with prolonged use.

FIG. 8B shows an illustrative graph 802 that plots a quantity of peptides identified by the LC-MS analyses of FIG. 8A using each emitter as a function of the number of injections into the LC-MS system with each emitter. As shown, for the first experiment performed with the first connector having the titanium junction without an electrochemical corrosion-resistant material included at the sealing surfaces, the number of peptides identified decreased as the number of injections introduced into the LC-MS system increased (e.g., as shown by the solid line marked by closed circles). For the second experiment performed with the second connector having the electrochemical corrosion-resistant material of gold included at the sealing surfaces of the electrically-conductive junction, the number of peptides identified slightly decreased as the number of injections introduced into the LC-MS system increased (e.g., as shown by the dash-dot-dash line marked by open triangles). However, the number of peptides identified for the second experiment performed with the second connector did not decrease nearly as much as the number of peptides identified for the first experiment performed with the first connector, which is believed to be due to the electrochemical corrosion-resistant material of gold included at the sealing surfaces of the second connector. Additionally, for the third experiment performed with the third connector having an electrochemical corrosion-resistant material of 904L stainless steel included at the sealing surfaces of the electrically-conductive junction, the number of peptides identified only slightly decreased as the number of injections introduced into the LC-MS system increased (e.g., as shown by the dashed line marked by "x", which ended at injection 300 in the third experiment).

The reduction of the decrease of number of peptides identified using the second and third connectors having the electrochemical corrosion-resistant material is believed to further indicate that the electrochemical corrosion-resistant material included at the sealing surfaces of the connector reduces and/or eliminates corrosion of the junction and, hence, degradation of the emitter with prolonged use. Accordingly, the connector including the electrochemical corrosion-resistant material at the first and second sealing surfaces of the electrically-conductive junction reduces and/or prevents corrosion of the connector and degradation of the emitter. Such a reduction and/or prevention of corrosion of the connector may further reduce and/or prevent a decrease in the sensitivity, efficiency, stability, and accuracy of ESI methods of LC-MS systems including the electrochemical corrosion-resistant material (e.g., by reducing and/or preventing a contamination of the mobile phase with electrochemical products, a broadening of peak widths of chromatographic peaks, and/or a decrease in ion identification of the mass spectra).

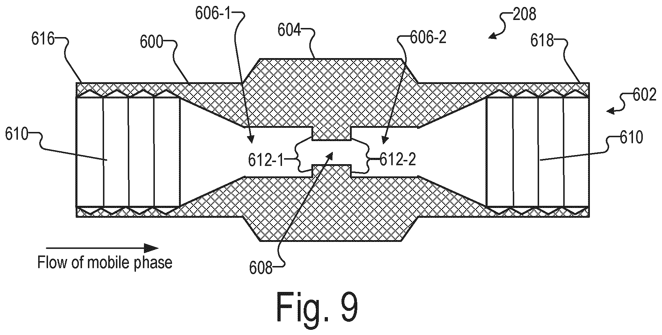

FIG. 9 shows a cross-sectional view of another illustrative implementation of electrochemical-resistant connector 208.

FIG. 9 is the same as FIG. 6B except that, in FIG. 9, junction 602 is made from the electrochemical corrosion-resistant material. Accordingly, at least first sealing surface 612-1 and second sealing surface 612-2 include the electrochemical corrosion-resistant material for reducing and/or preventing corrosion of junction 602 and/or degradation of emitter 302.

In some examples, junction 602 further comprises a sacrificial electrode (not shown in FIG. 9) interfacing with the mobile phase and configured to preferentially corrode relative to the electrochemical corrosion-resistant material of first sealing surface 612-1 and second sealing surface 612-2. For example, the sacrificial electrode may include a material having a standard reduction potential that is less than the standard reduction potential of the electrochemical corrosion-resistant material. In some examples, the sacrificial electrode includes a structure (e.g., a wire, rod, bar, coating, surface, etc.) made of titanium (or other metal of lower standard reduction potential than the electrochemical corrosion-resistant material, such as stainless steel) positioned within connector 208 or within junction 602 (e.g., within first receptacle 606-1, within second receptacle 606-2 and/or within through-hole 608) so as to interface with the mobile phase. Additionally or alternatively, when junction 602 comprises a first material (e.g., titanium) and a coating (e.g., coating 614) comprising a second material coated on the first material at first sealing surface 612-1 and second sealing surface 612-2, the sacrificial electrode may comprise the first material and the second material may comprise the electrochemical corrosion-resistant material. Such a sacrificial electrode will corrode preferentially over the electrochemical corrosion-resistant material at first sealing surface 612-1 and second sealing surface 612-2, thus further reducing and/or preventing corrosion at first sealing surface 612-1 and second sealing surface 612-2.

Other suitable configurations of a sacrificial electrode may be used. For example, the sacrificial electrode may include electrically conductive particles packed into the emitter near a tip of the emitter in a packed-tip emitter configuration. The electrically conductive particles may be formed of, or coated with, a sacrificial material (e.g., a material having a standard reduction potential lower than the standard reduction potential of sealing surfaces of the electrically-conductive junction). In other examples, the sacrificial electrode includes a sacrificial material coating on an inside surface of the emitter. In some examples, the electrochemical corrosion-resistant material at the sealing surfaces of the junction can be omitted by instead using a sacrificial electrode formed of a material having a standard reduction potential lower than the standard reduction potential of the electrically-conductive junction.

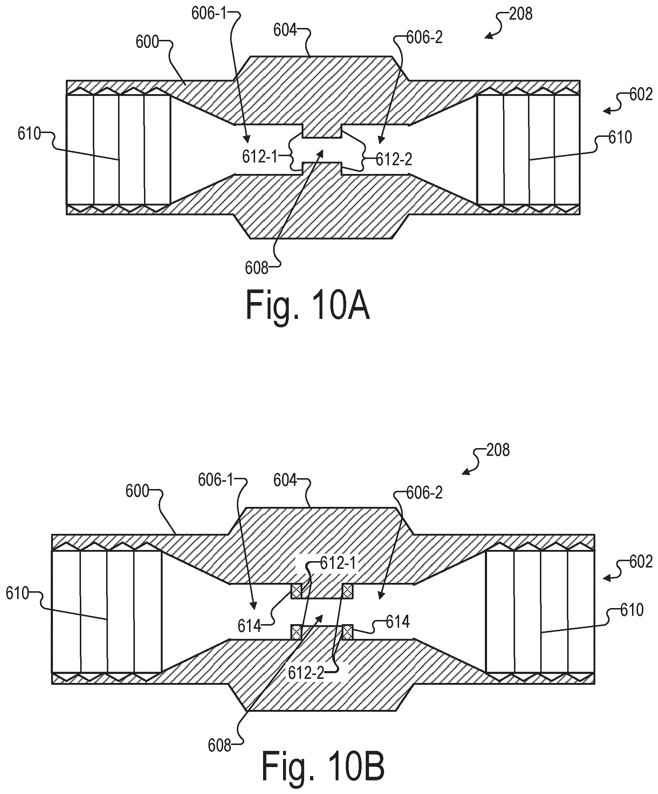

FIGS. 10A and 10B show various cross-sectional views of connector 208 to depict an illustrative method of making connector 208. The method comprises forming junction 602 configured to provide, when junction 602 is electrically connected with a power source, an electrospray voltage to the mobile phase. As shown in FIG. 10A, forming junction 602 comprises forming first receptacle 606-1 at a proximal end of connector 208 for receiving a distal end of the first conduit, forming second receptacle 606-2 at a distal end of connector 208 for receiving a proximal end of the second conduit, and forming through-hole 608 extending from first receptacle 606-1 to second receptacle 606-2. First receptacle 606-1 comprises first sealing surface 612-1 for interfacing with the mobile phase and fluidically sealing with the distal end of the first conduit. Likewise, second receptacle 606-2 comprises second sealing surface 612-2 for interfacing with the mobile phase and fluidically sealing with the proximal end of the second conduit. First sealing surface 612-1 and second sealing surface 612-2 each comprise an electrochemical corrosion-resistant material. That is, junction 602 of FIG. 10A is formed with the electrochemical corrosion-resistant material.

In other examples, forming junction 602 includes a multi-step process of forming junction 602 from a first material (e.g., an electrically-conductive material) and coating a second material including the electrochemical corrosion-resistant material on the first material at first sealing surface 612-1 and second sealing surface 612-2. For instance, in a first step shown in FIG. 10A, junction 602 is formed of a first material comprising an electrically-conductive material. In a second step shown in FIG. 10B, a coating 614 comprising the second material is applied to first sealing surface 612-1 and second sealing surface 612-2. Coating 614 may be applied to sealing surfaces 612 by any suitable method, such as but not limited to electroplating, sputter coating, chemical vapor deposition (CVD), electron beam vapor deposition, or thin-film deposition. Other suitable methods for making connector 208 having a first sealing surface 612-1 and a second sealing surface 612-2 that include an electrochemical corrosion-resistant material may be used. For example, coating 614 may additionally be applied to other surfaces of junction 602, such as inside surfaces of through-hole 608 and/or other surfaces within receptacles 606 (e.g., surfaces of dead volumes).

Various modifications may be made to the examples described above. For example, ion source 106 may be configured to emit, from emitter 302, ions toward an inlet of any other ion manipulation device, such as an ion guide, ion optics, or an ion mobility separator. In other modifications, the systems and methods described above may be used with other electrospray ionization techniques, such as PaperSpray ionization and PolymerSpray ionization.

It will be recognized by those of ordinary skill in the art that, while various illustrative examples have been described with reference to the accompanying drawings, various modifications and changes may be made thereto, and additional examples may be implemented, without departing from the scope of the claims that follow. For example, certain features of one example described herein may be combined with or substituted for features of another example described herein. The description and drawings are accordingly to be regarded in an illustrative rather than a restrictive sense. Moreover, the drawings are not to scale such that various features (e.g., through-hole 608 and/or dead volumes) may be exaggerated to facilitate viewing and understanding of concepts described herein.

Advantages and features of the present disclosure can be further described by the following examples:
Example 1. A connector configured to fluidically couple a first conduit and a second conduit to enable flow therethrough of a mobile phase for liquid chromatography, the connector comprising an electrically-conductive junction for providing, when the electrically-conductive junction is electrically connected with a power source, an electrospray voltage to the mobile phase, the electrically-conductive junction comprising: a first receptacle for receiving a distal end of the first conduit, the first receptacle comprising a first sealing surface that interfaces with the mobile phase and fluidically seals with the distal end of the first conduit; a second receptacle for receiving a proximal end of the second conduit, the second receptacle comprising a second sealing surface that interfaces with the mobile phase and fluidically seals with the proximal end of the second conduit; and a through-hole extending from the first receptacle to the second receptacle; wherein the first sealing surface and the second sealing surface each comprise an electrochemical corrosion-resistant material.
Example 2. The connector of example 1, wherein the electrochemical corrosion-resistant material has a standard reduction potential that is greater than the reduction potential of a standard hydrogen electrode (SHE).
Example 3. The connector of example 1, wherein the electrochemical corrosion-resistant material has a standard reduction potential that is greater than the standard reduction potential of titanium.
Example 4. The connector of example 1, wherein the electrochemical corrosion-resistant material comprises a noble metal.
Example 5. The connector of example 1, wherein the electrochemical corrosion-resistant material comprises a metal alloy that includes greater than about twenty percent (20%) nickel by mass.
Example 6. The connector of example 1, wherein the electrochemical corrosion-resistant material comprises a metal alloy that includes less than about one percent (1%) iron by mass.
Example 7. The connector of example 1, wherein the electrochemical corrosion-resistant material comprises gold.
Example 8. The connector of example 1, wherein the electrochemical corrosion-resistant material comprises a 904L stainless steel.
Example 9. The connector of example 1, wherein the electrically-conductive junction comprises a first material and a second material comprising a coating on the first material at the first sealing surface and the second sealing surface, the second material comprising the electrochemical corrosion-resistant material.
Example 10. The connector of example 9, wherein the first material comprises titanium.
Example 11. The connector of example 9, wherein the first material is electrically conductive.
Example 12. The connector of example 9, wherein the electrically-conductive junction further comprises the second material on the first material on an inside surface of the through-hole.
Example 13. The connector of example 9, wherein the coating is applied on the first material at the first and second sealing surfaces by electroplating or sputter coating.
Example 14. The connector of example 1, wherein the electrically-conductive junction comprises the electrochemical corrosion-resistant material.
Example 15. The connector of example 1, wherein the connector is a low dead volume or a no dead volume connector.
Example 16. The connector of example 1, wherein the electrically-conductive junction further comprises a sacrificial electrode interfacing with the mobile phase and configured to preferentially corrode relative to the electrochemical corrosion-resistant material of the first sealing surface and second sealing surface.
Example 17. The connector of example 16, wherein the sacrificial electrode comprises a metal having a lower standard reduction potential than the electrochemical corrosion-resistant material.
Example 18. The connector of example 16, wherein the electrically-conductive junction comprises a first material and a second material comprising a coating on the first material at the first sealing surface and the second sealing surface, the sacrificial electrode comprising the first material and the second material comprising the electrochemical corrosion-resistant material.
Example 19. A system for analyzing a sample by liquid chromatography-mass spectrometry, the system comprising: a first conduit; a second conduit; an electrospray ionization (ESI) emitter; a connector positioned between the first conduit and the second conduit and fluidically coupled with the first conduit and the second conduit to enable flow of a mobile phase through the first conduit and the second conduit to the ESI emitter, the connector including an electrically-conductive junction comprising: a first receptacle for receiving a distal end of the first conduit, the first receptacle comprising a first sealing surface configured to interface with the mobile phase and fluidically seal with the distal end of the first conduit; a second receptacle for receiving a proximal end of the second conduit, the second receptacle comprising a second sealing surface configured to interface with the mobile phase and fluidically seal with the proximal end of the second conduit; and a through-hole extending from the first receptacle to the second receptacle; wherein the first sealing surface and the second sealing surface each comprise an electrochemical corrosion-resistant material; and a power source electrically connected with the electrically-conductive junction to provide an electrospray voltage to the mobile phase.
Example 20. The system of example 19, further comprising a chromatographic column comprising a stationary phase.
Example 21. The system of example 20, wherein the chromatographic column is positioned upstream of the connector such that an outlet of the chromatographic column is fluidically coupled with the first conduit.
Example 22. The system of example 20, wherein the chromatographic column is positioned downstream of the connector such that an inlet of the chromatographic column is fluidically coupled with the second conduit.
Example 23. The system of example 19, wherein the electrochemical corrosion-resistant material has a standard reduction potential greater than a threshold standard reduction potential.
Example 24. The system of example 23, wherein the threshold standard reduction potential is the reduction potential of a standard hydrogen electrode (SHE).
Example 25. The system of example 23, wherein the threshold standard reduction potential is the standard reduction potential of titanium.
Example 26. The system of example 19, wherein electrically-conductive junction comprises a first material and a second material comprising a coating on the first material at the first sealing surface and the second sealing surface, the second material including the electrochemical corrosion-resistant material.
Example 27. The system of example 19, wherein electrically-conductive junction comprises the electrochemical corrosion-resistant material.
Example 28. A method of making a connector configured to fluidically couple a first conduit and a second conduit to enable flow therethrough of a mobile phase for liquid chromatography, the method comprising: forming an electrically-conductive junction configured to provide, when the electrically-conductive junction is electrically connected with a power source, an electrospray voltage to the mobile phase, the electrically-conductive junction comprising: a first receptacle at a proximal end of the connector for receiving a distal end of the first conduit, the first receptacle comprising a first sealing surface for interfacing with the mobile phase and fluidically sealing with the distal end of the first conduit; a second receptacle at a distal end of the connector for receiving a proximal end of the second conduit, the second receptacle comprising a second sealing surface for interfacing with the mobile phase and fluidically sealing with the proximal end of the second conduit; and a through-hole extending from the first receptacle to the second receptacle; wherein the first sealing surface and the second sealing surface each comprise an electrochemical corrosion-resistant material.
Example 29. The method of example 28, wherein the electrochemical corrosion-resistant material has a standard reduction potential greater than a threshold standard reduction potential.
Example 30. The method of example 28, wherein the forming the electrically-conductive junction comprises: forming the electrically-conductive junction from a first material and coating a second material including the electrochemical corrosion-resistant material on the first material at the first sealing surface and second sealing surface.
Example 31. The method of example 30, wherein the coating comprises electroplating or sputter coating the first sealing surface and second sealing surface with the electrochemical corrosion resistant material.
Example 32. The method of example 28, wherein the forming the electrically-conductive junction comprises forming the electrically-conductive junction from the electrochemical corrosion-resistant material.

## Claims

1. A connector configured to fluidically couple a first conduit and a second conduit to enable flow therethrough of a mobile phase for liquid chromatography, the connector comprising an electrically-conductive junction for providing, when the electrically-conductive junction is electrically connected with a power source, an electrospray voltage to the mobile phase, the electrically-conductive junction comprising:
a first receptacle for receiving a distal end of the first conduit, the first receptacle comprising a first sealing surface that interfaces with the mobile phase and fluidically seals with the distal end of the first conduit;
a second receptacle for receiving a proximal end of the second conduit, the second receptacle comprising a second sealing surface that interfaces with the mobile phase and fluidically seals with the proximal end of the second conduit; and
a through-hole extending from the first receptacle to the second receptacle;
wherein the first sealing surface and the second sealing surface each comprise an electrochemical corrosion-resistant material.

2. The connector of claim 1, wherein the electrochemical corrosion-resistant material has a standard reduction potential that is greater than a reduction potential of a standard hydrogen electrode (SHE).

3. The connector of claim 1, wherein the electrochemical corrosion-resistant material has a standard reduction potential that is greater than the standard reduction potential of titanium.

4. The connector of claim 1, wherein the electrochemical corrosion-resistant material comprises a noble metal.

5. The connector of claim 1, wherein the electrochemical corrosion-resistant material comprises a metal alloy that includes greater than about twenty percent (20%) nickel by mass.

6. The connector of claim 1, wherein the electrochemical corrosion-resistant material comprises a metal alloy that includes less than about one percent (1%) iron by mass.

7. The connector of claim 1, wherein the electrochemical corrosion-resistant material comprises gold.

8. The connector of claim 1, wherein the electrochemical corrosion-resistant material comprises a 904L stainless steel.

9. The connector of claim 1, wherein the electrically-conductive junction comprises a first material and a second material comprising a coating on the first material at the first sealing surface and the second sealing surface, the second material comprising the electrochemical corrosion-resistant material.

10. The connector of claim 9, wherein the first material comprises titanium.

11. The connector of claim 9, wherein the electrically-conductive junction further comprises the second material on the first material on an inside surface of the through-hole.

12. The connector of claim 1, wherein the electrically-conductive junction is formed from the electrochemical corrosion-resistant material.

13. The connector of claim 1, wherein the electrically-conductive junction further comprises a sacrificial electrode interfacing with the mobile phase and configured to preferentially corrode relative to the electrochemical corrosion-resistant material of the first sealing surface and second sealing surface.

14. The connector of claim 13, wherein the sacrificial electrode comprises a metal having a lower standard reduction potential than the electrochemical corrosion-resistant material.

15. The connector of claim 13, wherein the electrically-conductive junction comprises a first material and a second material comprising a coating on the first material at the first sealing surface and the second sealing surface, the sacrificial electrode comprising the first material and the second material comprising the electrochemical corrosion-resistant material.
